# FASCICULE DE BREVET EUROPEEN

(11) **EP 1 378 159 B1**
(45) Date de publication et mention de la délivrance du brevet: **25.04.2007**
(21) Numéro de dépôt: 03291643.9
(22) Date de dépôt: 03.07.2003
(51) Int. Cl.: A01D 41/14

(54) **Dispositif de broyage de chaumes et moissoneuses batteuses comportant un tel dispositif**
Zerkleinerungsvorrichtung für Stoppel und Mähdrescher mit solcher Vorrichtung
Shredding device for stubbles and combines comprising such a device

(30) Priorité: 03.07.2002 FR 0208286
(43) Date de publication de la demande: 07.01.2004
(73) Titulaire: Bertholle, Claude, 21330 Larrey (FR); de Valous, Benoît, 21400 Puits (FR)
(72) Inventeur: Bertholle, Claude, 21330 Larrey (FR); de Valous, Benoît, 21400 Puits (FR)
(74) Mandataire: Boutin, Antoine

(56) Documents cités:
- EP-A- 0 212 185
- EP-A- 0 365 019
- AT-B- 301 234
- DE-A- 3 606 030
- DE-A- 19 543 984
- FR-A- 2 418 621
- FR-A- 2 730 126
- US-A- 2 612 017
- US-A- 4 397 136
- PATENT ABSTRACTS OF JAPAN vol. 1997, no. 08, 29 août 1997 (1997-08-29) & JP 09 103161 A (YANMAR AGRICULT EQUIP CO LTD;YOUKA TEKKO KK), 22 avril 1997 (1997-04-22)

## Description

L'invention est relative à un dispositif de broyage de chaumes pour moissonneuse batteuse. Un tel dispositif est connu par le document FR-A-2418621. Le document FR-A-2730126 montre une moissonneuse batteuse ayant une barre de coupe à l'arrière du tablier de coupe.

L'invention est également relative aux moissonneuses batteuses à barre de coupe dont la lame de coupe est généralement à sections triangulaires (à l'exclusion des becs cueilleurs à maïs), comportant un dispositif selon l'invention.

Les moissonneuses batteuses actuelles ont des barres de coupe de plus en plus large, de 6 m à 9 m de large, ce qui a pour résultat que leur convoyeur central, situé en arrière du tablier portant ladite barre de coupe, absorbe une grande quantité de paille, ce qui engorge les moyens de battage et absorbe beaucoup d'énergie, et altère de façon importante les performances des moissonneuses.

Pour compenser cela et du fait que les méthodes actuelles de culture permettent d'avoir des récoltes très régulières en hauteur, les conducteurs de ces machines ajustent, en permanence, le tablier de coupe le plus haut possible, ce qui laisse derrière la machine des chaumes de grande hauteur écrasés par les roues, qui ne peuvent pas être proprement éliminés par les moyens usuels de déchaumage.

Il est alors nécessaire de passer derrière la moissonneuse un broyeur pour broyer les chaumes en morceaux suffisamment petits pour que l'on puisse passer la déchaumeuse, ou labourer directement, ou encore pratiquer des T C S (Techniques Culturales Simplifiées) ou du semis direct.

Il faut donc procéder à une opération complémentaire, ce qui coûte cher en personnel, en carburant et en temps.

La présente invention a pour objet :
1) De supprimer cette opération complémentaire et donc d'obtenir après le passage de la moissonneuse un champ prêt au passage de la déchaumeuse, ou au labour ou aux T C S, voire même au semis direct.
2) De limiter la quantité de paille absorbée par les organes de battage et de séparation en vue de maintenir une consommation d'énergie modérée et des performances élevées de la moissonneuse.

L'invention a pour objet un dispositif de broyage de chaumes pour moissonneuse-batteuse, selon la revendication 9.

Selon d'autres caractéristiques alternatives de l'invention :
- les moyens de coupe comportent au moins un disque portant en périphérie des couteaux ou lames de coupe,
- au moins un couteau est légèrement vrillé, comme une pale de ventilateur, de manière à créer un courant d'air ascendant faisant monter les tiges coupées par des couteaux vers les moyens de broyage,
- les moyens de broyage comportent au moins un étage de broyage comportant un support portant une ou plusieurs lames de broyage coopérant avec des contre-lames fixes,
- des patins sont disposés au-dessous de la zone des moyens de coupe de tiges de chaumes,
- un châssis porte les moyens de broyage de chaumes et porte au moins un organe tâteur traînant sur le sol,
- au moins un patin tâteur est articulé à un élément solidaire du châssis et relié à un capteur de position.
- le châssis est relié au tablier par un parallélogramme déformable actionné par un vérin, lui-même commandé par des signaux en provenance d'un capteur de position.

L'invention a également pour objet une moissonneuse batteuse selon la revendication 1.

L'invention sera mieux comprise grâce à la description qui va suivre, donnée à titre d'exemple non limitatif, en référence aux dessins annexés dans lesquels :
La figure 1 représente une vue schématique latérale illustrant un tablier de coupe de moissonneuse batteuse munie d'un dispositif selon l'invention ;
La figure 2 représente une vue en perspective d'un exemple de réalisation de l'invention.

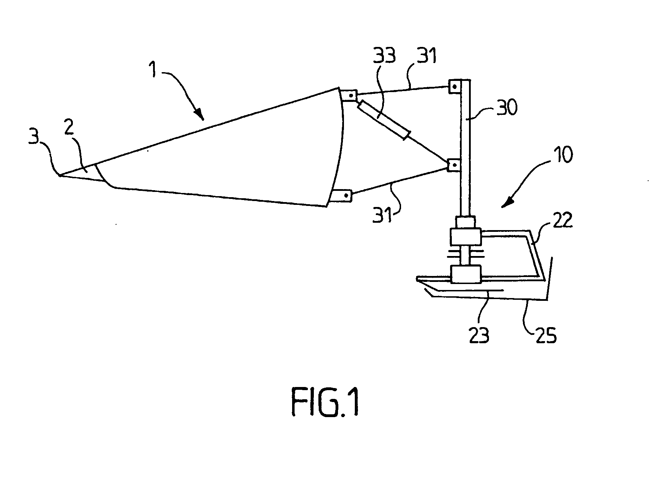

La Figure 1 représente, de façon schématique un tablier de coupe 1 de moissonneuse batteuse muni à l'avant d'un lamier 2 portant une barre de coupe 3.

Le dispositif 10, selon l'invention est placé à l'arrière du tablier 1 et légèrement en dessous.

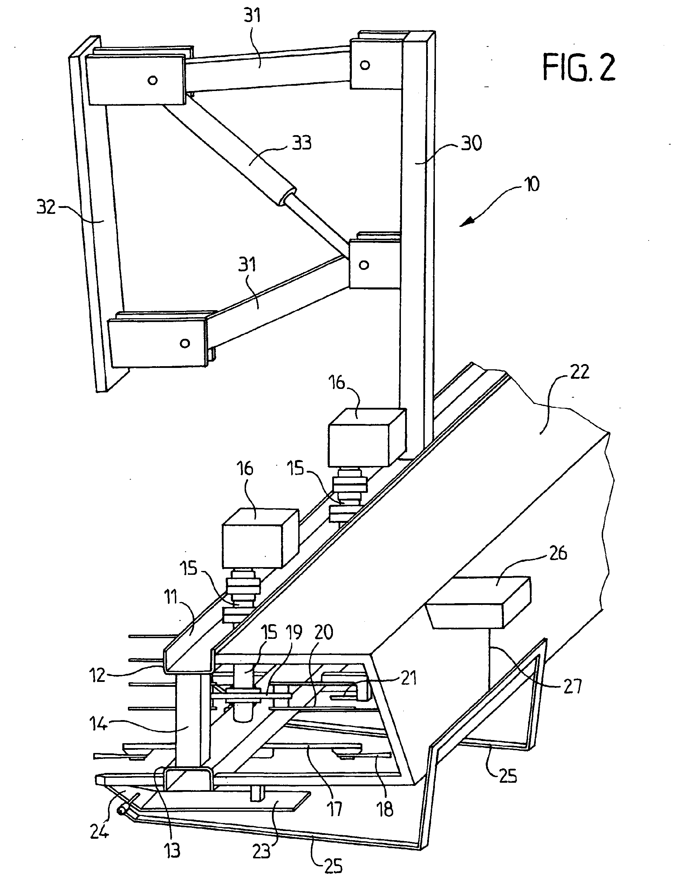

Sur la figure 2, le dispositif 10 selon l'invention comporte un châssis 11, qui est rectangulaire et constitué lui-même de deux poutrelles horizontales 12 et 13 reliées entre elles par des entretoises verticales 14.

Le châssis 11 porte une pluralité d'arbres verticaux 15 entraînés chacun par un moyen d'entraînement 16, par exemple un moteur hydraulique 16, ou tout autre moyen mécanique équivalent.

En dessous de la poutrelle inférieure 13, chaque arbre porte un disque 17 muni à sa périphérie de couteaux 18 ou lames de coupe équivalentes.

Les couteaux 18 peuvent être fixes ou mobiles, dans l'exemple représenté ils sont montés à pivotement en périphérie du disque 17.

Ces couteaux 18 sont légèrement vrillés de façon analogue à une hélice de façon à agir comme les pales d'un ventilateur en créant un mouvement d'air ascendant.

Entre les deux poutrelles 12 et 13 les arbres 15 portent des lames de broyage 20.

De préférence, chaque arbre 15 porte un ou plusieurs supports 19 à l'extrémité desquels sont montées à pivotement deux lames 20 qui passent l'une au-dessus, l'autre au-dessous d'une lame fixe 21.

A l'arrière du châssis 11 les poutrelles 12 et 13 portent un capot 22 qui recouvre les parties arrières des couteaux 18 et lames 20.

Dans le cas où les lames 20 et les couteaux 18 sont entraînés par des moteurs hydrauliques 16, il est difficile de les synchroniser parfaitement. C'est pourquoi on préfère dans le cas de moteurs hydrauliques 16 d'entraînement que les trajectoires des couteaux 18 ne se recoupent pas. Entre deux disques de coupe 17-18 il risque alors d'y avoir au moins une bande de chaume non coupée au ras du sol.

Pour éviter cela la poutrelle inférieure 13 porte des patins 23 qui sont fixes et qui sont disposés en dessous de la zone où les trajectoires des couteaux 18 de deux disques 17 voisins sont presque tangentes.

Ces patins 23 ont un double rôle : d'une part ils empêchent que les couteaux 18 ne viennent en contact avec le sol lorsque le châssis 1 est abaissé et d'autre part leurs spatules 24 jouent le rôle d'écarteurs en écartant les tiges de chaume vers les couteaux 18 ; de sorte qu'il n'y ait pas de tiges de chaume non coupées là où les trajectoires des couteaux 18 sont presque tangentes.

Cependant, il est également envisageable, sans sortir du cadre de la présente invention que les trajectoires des couteaux 18 se recoupent. En vue de leur recoupement, toujours dans le cas de moyens 16 d'entraînement non synchronisés tels que des moteurs hydrauliques 16, il est possible de les décaler en hauteur les uns par rapport aux autres mais cela empêche de les abaisser au maximum pour qu'ils ne soient pas endommagés par les pierres laissées au sol. Il est également possible de monter des disques de coupe 17-18 en décalage alterné.

Enfin, il est envisageable d'effectuer une synchronisation des disques de coupe 17-18, moyennant l'utilisation de moyens 16 d'entraînement synchronisés, comportant par exemple des transmissions mécaniques : dans cette variante non représentée de l'invention, des patins écarteurs ne sont pas indispensables et peuvent cependant être utilisés, si on le souhaite.

Le châssis 11 peut porter également un ou plusieurs tâteurs en contact flottant avec le sol.

Comme représenté à la Figure 2, les tâteurs peuvent être constitués par un patin double 25 qui est articulé soit directement à la poutrelle 13, soit, comme représenté, sur un ou plusieurs écarteurs 24, afin de traîner sur le sol.

Ce patin double 25 est relié à un capteur 26 par tout moyen approprié, par exemple par un câble 27.

Le capteur 26 est ainsi un capteur de position ; il est relié à la cabine du conducteur qui connaît en permanence la position en hauteur du dispositif 10 par rapport au sol.

Le dispositif 10 est relié au tablier de coupe 1 de la moissonneuse batteuse, à l'arrière de celui-ci par des moyens de levage, et de réglage de hauteur permettant de l'abaisser ou de le relever par rapport audit tablier 1.

Le châssis 11 est relié à un montant vertical 30 qui est relié au moyen de deux bielles 31 à un montant 32, fixé derrière le tablier 1. Les deux montants verticaux 30-32 et les deux bielles 31 forment un parallélogramme déformable, dont les mouvements de déformation sont commandés par un vérin 33.

Il y a de préférence deux patins 25, un à chaque extrémité du dispositif selon l'invention, et deux moyens de levage, ce qui permet d'avoir un très bon suivi du terrain.

De préférence, lorsque le tablier de coupe à une très grande largeur (de 6 à 9 mètres), le broyeur sera scindé en deux ou plusieurs unités autonomes, chaque unité formant un dispositif modulaire selon l'invention.

De préférence également le (ou les) moyens de levage sont automatiquement actionnés lorsque le tablier 1 est complètement relevé, par exemple en fin de rangée.

Grâce au dispositif de levage 30, 31, 32, 33 et aux patins 25 le conducteur peut positionner en hauteur les couteaux 18 pour couper au ras du sol les tiges de chaume, tout en les broyant à l'aide des lames 20 de broyage coopérant avec les contre-lames fixes 21.

Il est possible également d'asservir la position en hauteur à un moyen de commande automatique, piloté par la position en hauteur de la barre de coupe de la moissonneuse-batteuse.

Les tiges de chaume coupées sont soulevées par le courant d'air ascendant créé par lesdits couteaux 18 qui agissent comme les pales d'un ventilateur, pour envoyer les tiges de chaume vers les organes 20, 21 de broyage.

Ces tiges sont alors broyées en petits morceaux par les lames 20 et les contre-lames 21 et projetées contre le capot 22 qui les retient, pour retomber ensuite sur le sol.

De plus, le montage d'un ou plusieurs châssis 11 au moyen de deux ou plusieurs parallélogrammes déformables permet de remonter et d'effacer très facilement le dispositif selon la présente invention dans des cas de récoltes particulières, comme la récolte de petits pois ou de blés couchés. En effet lorsque le tablier 1 est posé au sol et que les châssis 11 sont relevés au maximum au moyen des vérins 33, les patins écarteurs 24 ou spatules ainsi que les patins fixes 23 ne touchent pas le sol ; tandis que les tâteurs 25 peuvent éventuellement être bloqués en position haute, si leur contact avec le sol n'est pas souhaitable.

L'invention décrite en référence à un mode de réalisation particulier couvre également toutes les variantes non représentées d'entraînement synchronisé ou non par des moyens 16 de toute nature, avec ou sans patins écarteurs 23-24, l'essentiel étant de combiner une action de coupe élévatrice avec une action de broyage des tiges de chaume coupées.

## Revendications

1. Moissonneuse-batteuse comportant derrière le tablier de coupe et à une hauteur réglable, un dispositif de broyage de chaumes comportant des moyens (20 - 21) de broyage de chaumes, et des moyens de liaison (30 - 33) du dispositif au tablier de la moissonneuse-batteuse, lesdits moyens de liaison (30 - 33) permettant le montage du dispositif devant les roues de la moissonneuse et lesdits moyens de liaison (30 - 33) comportant un moyen (33) d'actionnement pour régler le dispositif à une hauteur totalement indépendante de celle du tablier (1), dans laquelle les moyens (20 - 21) de broyage de chaumes sont combinés à des moyens (17 - 18) de coupe de tiges de chaumes, et dans laquelle les moyens (20 - 21) de broyage de chaumes et les moyens (17 - 18) de coupe sont rotatifs et portés par un même axe vertical (15) entraîné par un moyen d'entraînement (16).

2. Moissonneuse-batteuse selon la revendication 1, dans laquelle les moyens de coupe (17 - 18) comportent au moins un disque (17) portant en périphérie des couteaux (18) ou lames de coupe.

3. Moissonneuse-batteuse selon la revendication 2, dans laquelle au moins un couteau (18) est légèrement vrillé, comme une pale de ventilateur, de manière à créer un courant d'air ascendant faisant monter les tiges coupées par des couteaux (18) vers les moyens (20 - 21) de broyage.

4. Moissonneuse-batteuse selon la revendication 1, dans laquelle les moyens de broyage (20 - 21) comportent au moins un étage de broyage comportant un support (19) portant une ou plusieurs lames (20) de broyage coopérant avec des contre-lames fixes (21).

5. Moissonneuse-batteuse selon l'une quelconque des revendications 1 à 4, dans laquelle des patins (23-24) sont disposés au-dessous de la zone des moyens (17 - 18) de coupe de tiges de chaumes.

6. Moissonneuse-batteuse selon l'une quelconque des revendications précédentes, comportant un châssis (11) portant les moyens (20-21) de broyage de chaumes et portant au moins un organe tâteur (25) traînant sur le sol.

7. Moissonneuse-batteuse selon la revendication 6, dans laquelle au moins un patin tâteur (25) est articulé à un élément solidaire du châssis (11) et relié à un capteur (26) de position.

8. Moissonneuse-batteuse selon la revendication 6 ou la revendication 7, dans laquelle le châssis (11) est relié au tablier (1) par un parallélogramme déformable (30 - 32) actionné par un vérin (33), lui-même commandé par des signaux en provenance d'un capteur (26) de position.

9. Dispositif de broyage de chaumes pour moissonneuse-batteuse comportant un tablier de coupe, ledit dispositif étant destiné à être monté derrière le tablier de coupe et à hauteur réglable, le dispositif de broyage de chaumes comportant des moyens (20 - 21) de broyage de chaumes, et des moyens de liaison (30 - 33) du dispositif au tablier de la moissonneuse-batteuse, lesdits moyens de liaison (30 - 33) permettant le montage du dispositif devant les roues de la moissonneuse et lesdits moyens de liaison (30 - 33) comportant un moyen (33) d'actionnement pour régler le dispositif à une hauteur totalement indépendante de celle du tablier (1), dans lequel les moyens (20 - 21) de broyage de chaumes sont combinés à des moyens (17 - 18) de coupe de tiges de chaumes, et dans lequel les moyens (20 - 21) de broyage de chaumes et les moyens (17 - 18) de coupe sont rotatifs et portés par un même axe vertical (15) entraîné par un moyen d'entraînement (16).

## Claims

1. A combine harvester comprising, behind the cutting table and at an adjustable height, a stubble shredding device comprising stubble shredding means (20-21), and means (30-33) for connecting the device to the table of the combine harvester, said connection means (30-33) enabling the device to be mounted in front of the wheels of the harvester and said connection means (30-33) comprising an actuating means (33) for adjusting the device to a height which is totally independent of that of the table (1), in which the stubble shredding means (20-21) are combined with stubble stalk cutting means (17-18), and in which the stubble shredding means (20-21) and the cutting means (17-18) are rotary and borne by one and the same vertical axle (15) driven by a drive means (16).

2. A combine harvester according to Claim 1, in which the cutting means (17-18) comprise at least one disc (17) bearing knives (18) or cutting blades on its periphery.

3. A combine harvester according to Claim 2, in which at least one knife (18) is slightly twisted, like a fan blade, so as to create an ascending air current which carries the stalks cut by the knives (18) upwards towards the shredding means (20-21).

4. A combine harvester according to Claim 1, in which the shredding means (20-21) comprise at least one shredding stage comprising a support (19) bearing one or more shredding blades (20) which cooperate with fixed counter-blades (21).

5. A combine harvester according to any one of Claims 1 to 4, in which skids (23-24) are arranged below the zone of the stubble stalk cutting means (17-18).

6. A combine harvester according to any one of the preceding claims, comprising an underframe (11) bearing the stubble shredding means (20-21) and bearing at least one feeler element (25) which trails on the ground.

7. A combine harvester according to Claim 6, in which at least one feeler skid (25) is articulated to an element integral with the underframe (11) and connected to a position sensor (26).

8. A combine harvester according to Claim 6 or Claim 7, in which the underframe (11) is connected to the table (1) by a deformable parallelogram (30-32) actuated by a piston-cylinder unit (33), which in turn is controlled by signals coming from a position sensor (26).

9. A stubble shredding device for a combine harvester comprising a cutting table, said device being intended to be mounted behind the cutting table and at an adjustable height, the stubble shredding device comprising stubble shredding means (20-21) and means (30-33) for connecting the device to the table of the combine harvester, said connection means (30-33) enabling the device to be mounted in front of the wheels of the harvester and said connection means (30-33) comprising an actuating means (33) for adjusting the device to a height which is totally independent of that of the table (1), in which the stubble shredding means (20-21) are combined with stubble stalk cutting means (17-18), and in which the stubble shredding means (20-21) and the cutting means (17-18) are rotary and borne by one and the same vertical axle (15) driven by a drive means (16).

## Patentansprüche

1. Mähdrescher mit einer hinter dem Schneidwerkstisch sitzenden, höhenverstellbaren Vorrichtung zum Zerkleinern von Stroh, die umfaßt: Mittel (20-21) zum Zerkleinern von Stroh und Mittel (30-33) zum Verbinden der Vorrichtung mit dem Tisch des Mähdreschers, wobei die Verbindungsmittel (30-33) die Montage der Vorrichtung vor den Rädern des Mähdreschers gestatten und ein Betätigungsmittel (33) zum Einstellen der Vorrichtung auf eine von der Höhe des Tisches (1) vollkommen unabhängige Höhe umfassen, wobei die Mittel (20-21) zum Zerkleinern von Stroh mit Mitteln (17-18) zum Schneiden von Strohhalmen kombiniert und die Mittel (20-21) zum Zerkleinern von Stroh sowie die Mittel (17-18) zum Schneiden drehbar sind und von derselben vertikalen Welle (15) getragen werden, die von einem Antriebsmittel (16) angetrieben wird.

2. Mähdrescher nach Anspruch 1, bei dem die Mittel (17-18) zum Schneiden mindestens eine Scheibe (17) umfassen, die an ihrem Rand Messer (18) oder Schneidklingen trägt.

3. Mähdrescher nach Anspruch 2, bei dem mindestens ein Messer (18) leicht verdreht ist, wie ein Gebläseflügel, um einen aufsteigenden Luftstrom zu erzeugen, der die von den Messern (18) abgeschnittenen Halme zu den Mitteln (20-21) zum Zerkleinern hin aufsteigen läßt.

4. Mähdrescher nach Anspruch 1, bei dem die Mittel (20-21) zum Zerkleinern mindestens eine Zerkleinerungsstufe mit einem Träger (19) umfassen, der eine oder mehrere Zerkleinerungsklingen (20) trägt, welche mit feststehenden Gegenklingen (21) zusammenwirken.

5. Mähdrescher nach einem der Ansprüche 1 bis 4, bei dem Kufen (23-24) unterhalb des Bereichs der Mittel (17-18) zum Schneiden von Strohhalmen angeordnet sind.

6. Mähdrescher nach einem der vorhergehenden Ansprüche, mit einem Rahmen (11), der die Mittel (20-21) zum Zerkleinern von Stroh und mindestens ein auf dem Boden schleifendes Tastorgan (25) trägt.

7. Mähdrescher nach Anspruch 6, bei dem mindestens eine Tastkufe (25) an einem fest mit dem Rahmen (11) verbundenen Element angelenkt und mit einem Lagesensor (26) verbunden ist.

8. Mähdrescher nach Anspruch 6 oder Anspruch 7, bei dem das Gestell (11) mit dem Tisch (1) über ein verformbares Parallelogramm (30-32) verbunden ist, das über einen Zylinder (33) betätigt wird, der seinerseits über von einem Lagesensor (26) stammende Signale gesteuert wird.

9. Vorrichtung zum Zerkleinern von Stroh für einen Mähdrescher mit einem Schneidwerkstisch, wobei die Vorrichtung dazu dient, höhenverstellbar hinter dem Schneidwerkstisch montiert zu werden, und die Vorrichtung zum Zerkleinern von Stroh Mittel (20-21) zum Zerkleinern von Halmen und Mittel (30-33) zum Verbinden der Vorrichtung mit dem Tisch des Mähdreschers umfaßt, wobei die Verbindungsmittel (30-33) die Montage der Vorrichtung vor den Rädern des Mähdreschers gestatten und ein Betätigungsmittel (33) zum Einstellen der Vorrichtung auf eine von der Höhe des Tisches (1) vollkommen unabhängige Höhe umfassen, wobei die Mittel (20-21) zum Zerkleinern von Stroh mit Mitteln (17-18) zum Schneiden von Strohhalmen kombiniert und die Mittel (20-21) zum Zerkleinern von Stroh sowie die Mittel (17-18) zum Schneiden drehbar sind und von derselben vertikalen Welle (15) getragen werden, die von einem Antriebsmittel (16) angetrieben wird.
